## Europäisches Patentamt
## European Patent Office
## Office européen des brevets

(19)

(11) Veröffentlichungsnummer: **0 056 431**
**B1**

(12) **EUROPÄISCHE PATENTSCHRIFT**

(45) Veröffentlichungstag der Patentschrift:
**04.12.85**

(51) Int. Cl.⁴: **B 62 B 3/00**

(21) Anmeldenummer: **81108407.8**

(22) Anmeldetag: **16.10.81**

(54) **Vorrichtung unter schweren Gegenständen zu deren Transport.**

(30) Priorität: **17.01.81 DE 8101075 U**

(43) Veröffentlichungstag der Anmeldung:
**28.07.82 Patentblatt 82/30**

(45) Bekanntmachung des Hinweises auf die Patenterteilung:
**04.12.85 Patentblatt 85/49**

(84) Benannte Vertragsstaaten:
**AT BE CH DE FR GB IT LI NL SE**

(56) Entgegenhaltungen:
**CH - A - 284 237**
**FR - A - 1 322 099**
**FR - E - 28 802**
**GB - A - 571 895**
**US - A - 4 171 828**

(73) Patentinhaber: **Wenko-Wenselaar GmbH,**
**Harffstrasse 36, D-4000 Düsseldorf (DE)**

(72) Erfinder: **Köllner, Hanns J., Uhlandstrasse 30,**
**D-4000 Düsseldorf (DE)**

(74) Vertreter: **Patentanwaltsbüro Cohausz & Florack,**
**Postfach 14 01 47, D-4000 Düsseldorf 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Beschreibung

Die Erfindung betrifft eine Vorrichtung unter schweren Gegenständen, wie Möbel oder Großgeräten zu deren Transport, mit einer rechteckigen, waagerechten Platten, unter der Räder oder Rollen angeordnet sind, wobei jedes Rad bzw. jede Rolle oder jedes Rad- bzw. Rollenpaar jeweils in einer Halterung gelagert ist, die um eine senkrechte Achse an der Platte drehbar befestigt ist, und die entlang einer Längsseite befestigten Halterungen gegenüber denen der anderen Längsseite derart befestigt sind, daß sie unterschiedliche Abstände zu den Schmalseiten haben.

Es sind Untersätze für Möbel oder Großgeräte bekannt, die eine obere, waagerechte schmale Platte aufweisen, unter der Rollen montiert sind, deren Drehachsen quer zur Plattenlängsachse angeordnet sind. Üblicherweise werden zwei solcher Vorrichtungen unter ein Möbelstück oder elektrisches Großgerät geschoben, um dieses zu transportieren.

Da die vier Rollen dieser bekannten Vorrichtungen nur um ihre Drehachse verdrehbar sind, ist eine Richtungsänderung des zu transportierenden Gegenstandes mühsam. Ferner sind die Rollen nur unter beiden Enden der Platte angeordnet, so daß eine Belastung der Platte in der Mitte zwischen den Rollen leicht zu einem Durchbiegen oder Durchbrechen der Platte führen kann, da der Abstand der Rollenpaare voneinander verhältnismäßig groß ist.

Aus der FR-A 13 22 099 ist ein Rahmen mit Rollen bekannt, die auf einer Längsseite nahe den Schmalseiten und auf der anderen Längsseite mittig angeordnet sind. Eine solche Vorrichtung baut groß und läßt eine hohe Punktbelastung weder in der Mitte noch an zwei Ecken zu.

Aufgabe der Erfindung ist es, eine Vorrichtung der eingangs genannten Art derart zu verbessern, daß sie schmal baut, bei einfacher Herstellung an allen Stellen der Platte punktweise hochbelastbar ist und eine Richtungsänderung der zu transportierenden Vorrichtungen zuläßt.

Diese Aufgabe wird erfindungsgemäß dadurch gelöst, daß die Länge der Platte ein Mehrfaches ihrer Breite beträgt, daß mehr als vier, insbesondere fünf oder sechs zueinander versetzt angeordnete Halterungen angeordnet sind und daß die kreisförmigen Bewegungsräume der Halterungen die Längsmittelachse der Platte überragen.

Diese Vorrichtung gewährt bei einfachster Konstruktion und leichter Montage eine hohe Stabilität der Platte in allen Bereichen, so daß sie auch mittig punktförmig stark belastet werden kann. Dies tritt insbesondere dann auf, während die Vorrichtung unter zu transportierende Gegenstände geschoben wird und kurzzeitig eine Kante oder Ecke des Gegenstandes auf der Platte insbesondere mittig aufliegt und der Gegenstand angekippt wird.

Obwohl die Vorrichtung nach allen Seiten drehbare Räder oder Rollen aufweist und damit ein Verschieben der Gegenstände in allen Richtungen zuläßt, baut sie ungewöhnlich klein. Dies liegt u. a. daran, daß, ohne Nachteile in Kauf zu nehmen, von dem festgefahrenen Prinzip abgewichen wurde, in der Nähe jeder Ecke der Platte im selben Abstand zur Ecke eine Rolle oder ein Rad anzuordnen. Die erfindungsgemäße Vorrichtung ist von hoher Kippsicherheit.

Hierzu wird auch vorgeschlagen, daß die kreisförmigen Bewegungsräume der Halterungen die Längsseiten der Platte überragen. Vorzugsweise wird vorgeschlagen, daß eine Hälfte der Gesamthalterungszahl in der Nähe des einen Plattenendes und die andere Hälfte in der Nähe des anderen Plattenendes befestigt ist. Dabei kann zwischen den beiden Hälften ein größerer Abstand bestehen als zwischen den Halterungen einer Hälfte. Es sollte aber der in der Mitte entstehende Abstand zwischen den beiden Hälften nicht größer sein als etwa die Breite der Platte.

Eine konstruktiv einfache, kippsichere und kompakte Vorrichtung wird dadurch geschaffen, daß eine Hälfte der senkrechten Achsen der Halterungen auf einer einer Längsseite nahen, zu dieser parallelen Linie und die andere Hälfte auf einer der anderen Längsseite nahen, zu dieser parallelen Linie angeordnet sind.

Ein Ausführungsbeispiel der Erfindung ist in der Zeichnung dargestellt und wird im folgenden näher beschrieben. Es zeigt

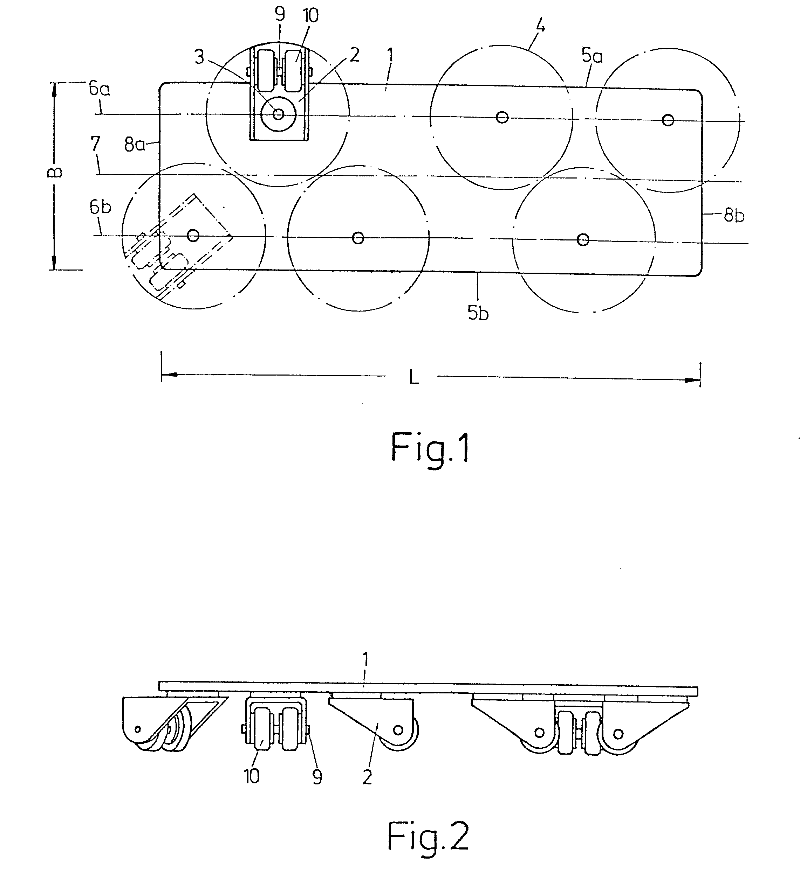

Fig. 1 eine Unteransicht der Vorrichtung und
Fig. 2 eine Seitenansicht.

Die Vorrichtung weist eine obere waagerechte Platte 1 aus Stahlblech auf, deren Länge L ein Mehrfaches der Breite B beträgt. Die Ränder der Platte sind nach unten umgebogen, um diese zu versteifen und Verletzungen und Beschädigungen zu verringern. Die Oberseite der Platte ist mit einem gummiähnlichen Kunststoffbelag versehen, der ein Abrutschen von Gegenständen verhindert.

An der Unterseite der Platte 1 sind Halterungen 2 mit senkrechten Achsen 3 derart befestigt, daß die Halterung sich um diese Achse innerhalb eines kreisförmigen Bewegungsraums 4 drehen kann. Von den sechs Halterungen 2 sind drei Halterungen in der Nähe und entlang einer Längsseite 5a befestigt und die anderen drei Halterungen entlang und in der Nähe der gegenüberliegenden Längsseite 5b. Dabei befinden sich die Achsen 3 auf Linien 6a, 6b, die in der Nähe der Längsseiten parallel zu diesen liegen. Damit haben alle Achsen 3 den gleichen Abstand zu den Längsseiten als auch zur Längsmittelachse 7.

Die auf einer Längshälfte angeordneten Achsen 3 der Halterungen 2 sind versetzt angeordnet zu denen der anderen Längshälfte, so daß die Achsen 3 unterschiedliche Abstände zu den Schmalseiten 8a, 8b besitzen und die kreisförmigen Bewegungsräume 4 die Längsmittelachse 7 überschreitend zahnförmig ineinandergreifen, ohne einander zu überdecken. Hierdurch ist sichergestellt, daß die Halterungen niemals einander berühren. Der Abstand der Halterungen voneinander ist mindestens gleich dem Durchmesser des kreisförmigen Bewegungsraums 4.

Im mittleren Bereich in dem Abstand zwischen den beiden Schmalseiten kann der Abstand der Halterungen 2 bzw. der senkrechten Achsen 3 voneinander etwas größer sein, so daß die Halterungen 2 Dreiergruppen bilden, die jeweils einem Plattenende zugeordnet sind.

Jede Halterung 2 weist eine waagerechte Achse 9 auf, die gegenüber der Achse 3 verschoben ist und zwei Rollen oder Räder 10 trägt.

Besonders preiswert ist die Vorrichtung herstellbar, wenn statt der sechs Halterungen nur fünf befestigt sind, wobei eine Halterung im mittleren Bereich, d. h. eine von einer Schmalseite entfernte, fehlt. Eine hohe Festigkeit einer insbesondere aus Blech gefertigten Platte wird dadurch erreicht, daß sie Wellen oder Verformungen aufweist, die in Längsrichtung angeordnet sind.

## Patentansprüche

1. Vorrichtung unter schweren Gegenständen, wie Möbel oder Großgeräten zu deren Transport, mit einer rechteckigen, waagerechten Platte (1), unter der Räder oder Rollen (10) angeordnet sind, wobei jedes Rad bzw. jede Rolle oder jedes Rad- bzw. Rollenpaar (10) jeweils in einer Halterung (2) gelagert ist, die um eine senkrechte Achse (3) an der Platte (1) drehbar befestigt ist, und die entlang einer Längsseite (5a) befestigten Halterungen (2) gegenüber denen der anderen Längsseite (5b) derart befestigt sind, daß sie unterschiedliche Abstände zu den Schmalseiten (8a, 8b) haben, dadurch gekennzeichnet, daß die Länge der Platte ein Mehrfaches ihrer Breite beträgt, daß mehr als vier, insbesondere fünf oder sechs zueinander versetzt angeordnete Halterungen (2) angeordnet sind und daß die kreisförmigen Bewegungsräume (4) der Halterungen (2) die Längsmittelachse (7) der Platte (1) überragen.

2. Vorrichtung nach Anspruch 1, dadurch gekennzeichnet, daß die kreisförmigen Bewegungsräume (4) der Halterungen (2) die Längsseiten (5a, 5b) der Platte (1) überragen.

3. Vorrichtung nach Anspruch 1 oder 2, dadurch gekennzeichnet, daß etwa eine Hälfte der Gesamthalterungszahl in der Nähe des einen Plattenendes und die andere Hälfte in der Nähe des anderen Plattenendes befestigt ist.

4. Vorrichtung nach Anspruch 3, dadurch gekennzeichnet, daß zwischen den beiden Hälften ein größerer Abstand besteht als zwischen den Halterungen (2) einer Hälfte.

5. Vorrichtung nach einem der Ansprüche 1 bis 4, dadurch gekennzeichnet, daß eine Hälfte der senkrechten Achsen (3) der Halterungen (2) auf einer einer Längsseite (5a) nahen, zu dieser parallelen Linie (6a) und die andere Hälfte auf einer der anderen Längsseite nahen, zu dieser parallelen Linie (6b) befestigt sind.

6. Vorrichtung nach einem der Ansprüche 1 bis 5, dadurch gekennzeichnet, daß die Platte (1) Verformungen, insbesondere wellenförmige aufweist, die in Plattenlängsrichtung ausgerichtet sind.

## Claims

1. Device under heavy articles, such as furniture or large appliances, for transporting them, with a rectangular horizontal plate (1), under which wheels or rollers (10) are arranged, each wheel or each roller or each pair of wheels or rollers (10) being supported in a mounting (2) fastened to the plate (1) so as to be rotatable about a vertical axle (3), and the mountings (2) fastened along one long side (5a) being fastened relative to those of the other long side (5b) in such a way that they are at different distances from the short sides (8a, 8b), characterised in that the length of the plate is a multiple of its width, in that more than four, especially five or six mountings (2) arranged offset relative to one another are provided, and in that the circular ranges of movement (4) of the mountings (2) extend beyond the longitudinal centre axis (7) of the plate (1).

2. Device according to claim 1, characterised in that the circular ranges of movement (4) of the mountings (2) extend beyond the long sides (5a, 5b) of the plate (1).

3. Device according to claim 1 or 2, characterised in that approximately one half of the total number of mountings is fastened in the vicinity of one end of the plate and the other half is fastened in the vicinity of the other end of the plate.

4. Device according to claim 3, characterised in that there is a greater distance between the two halves than between the mountings (2) of one half.

5. Device according to one of claims 1 to 4, characterised in that one half of the vertical axles (3) of the mountings (2) are fastened in a line (6a) near to one long side (5a) and parallel to this, and the other half is fastened in a line (6b) near to the other long side and parallel to this.

6. Device according to one of claims 1 to 5, characterised in that the plate (1) has deformations, especially corrugated deformations, which are aligned in the longitudinal direction of the plate.

## Revendications

1. Dispositif sous des objets lourds, comme des meubles ou des grands appareils pour leur transport avec un plateau (1) rectangulaire horizontal sous lequel sont disposés des roues ou des rouleaux (10), chaque roue ou chaque rouleau ou chaque paire de roues ou de rouleaux (10) étant logé dans une attache (2) qui est montée pivotante autour d'un axe vertical (3) sur le plateau (1), et les attaches (2) fixées le long d'un grand côté (5a) étant fixées par rapport à celles de l'autre grand côté (5b) de telle manière qu'elles ont des écartements différents des petits côtés (8a, 8b),. caractérisé en ce que la longueur du plateau est un multiple de sa largeur, que plus de quatre, en particulier cinq ou six, attaches (2) sont disposées décalées les unes par rapport aux autres et que les espaces de mouvement (4) circulaires des attaches (2) dépassent l'axe longitudinal médian (7) du plateau (1).

2. Dispositif selon la revendication 1, caractérisé en ce que les espaces de mouvement (4) circulaires des attaches (2) dépassent les grands côtés (5a, 5b) du plateau (1).

3. Dispositif selon la revendication 1 ou 2, caractérisé en ce qu'environ une moitié du nombre total d'attaches est fixée au voisinage d'une extrémité du plateau et l'autre moitié au voisinage de l'autre extrémité du plateau.

4. Dispositif selon la revendication 3, caractérisé en ce qu'une plus grande distance existe entre les deux moitiés qu'entre les attaches (2) d'une moitié.

5. Dispositif selon l'une des revendications 1 à 4, caractérisé en ce qu'une moitié des axes (3) verticaux des attaches (2) est fixée selon une ligne (6a) voisine d'un grand côté (5a) et parallèle à celui-ci, et l'autre moifié est fixée selon une ligne (6b) voisine de l'autre grand côté et parallèle à celui-ci.

6. Dispositif selon l'une des revendications 1 à 5, caractérisé en ce que le plateau (1) présente des déformations, en particulier ondulées, qui sont orientées en direction longitudinale du plateau.

Fig.1

Fig.2